# EUROPÄISCHE PATENTSCHRIFT

(11) **EP 1 502 526 B1**
(45) Veröffentlichungstag und Bekanntmachung des Hinweises auf die Patenterteilung: **20.06.2007**
(21) Anmeldenummer: 04017787.5
(22) Anmeldetag: 27.07.2004
(51) Int. Cl.: A47J 31/06, A47J 31/44

(54) **Kaffeefilteraufsatz**
Spreader plate for coffee filter
Couvercle distributeur pour bac à mouture

(30) Priorität: 04.12.2003 DE 20318733 U; 04.12.2003 DE 20318734 U; 16.12.2003 DE 20319485 U; 20.02.2004 DE 202004002691 U; 31.03.2004 DE 202004005107 U; 28.05.2004 DE 202004008707 U; 06.11.2003 DE 10352316; 11.08.2003 WO PCT/DE03/02711; 28.07.2003 DE 10334376
(43) Veröffentlichungstag der Anmeldung: 02.02.2005
(73) Patentinhaber: Merz, Michaela, 82380 Peissenberg (DE); Pirkl, Herbert Robert, 82380 Peissenberg (DE)
(72) Erfinder: Werner Brandt, 82380 Peissenberg (DE)
(74) Vertreter: Reitstötter - Kinzebach

(56) Entgegenhaltungen:
- DE-A- 10 111 166
- DE-U- 9 012 330
- DE-U- 20 106 677
- FR-A- 2 634 365
- US-A- 3 908 530

## Beschreibung

### Gebiet der Erfindung

Die Erfindung betrifft einen Kaffeefilteraufsatz zum Verteilen von Brühwasser auf Kaffeemehl.

### Stand der Technik

In Privathaushalten aber auch im gastronomischen Bereich werden zur Herstellung von Filterkaffee üblicherweise Kaffeemaschinen verwendet, bei denen erhitztes Wasser, das im Folgenden als Brühwasser bezeichnet wird, nach Durchlaufen einer Heizeinrichtung über einen Tropfauslaß auf Kaffeemehl aufgegeben, das sich in einem trichterförmigen Filter befindet, der wiederum in einem Filterhalter angeordnet ist. Am Boden des Filterhalters sind ein oder mehrere Öffnungen ausgespart, durch die der Kaffee mit dem aus dem Kaffeemehl extrahierten Aromastoffen in eine unter dem Filterhalter angeordnete Kaffeekanne fließen kann. Anstelle einer üblichen Kaffeemaschine mit integrierter Heizvorrichtung für das Brühwasser kann eine solche Filteranordnung selbstverständlich auch manuell mit separat erhitztem Wasser, beispielsweise aus einem Wasserkocher, beaufschlagt werden.

Sowohl bei einem manuellen Kaffeebrühverfahren, als auch bei einem automatischen Brühverfahren, wird das Brühwasser üblicherweise im Zentrum des Kaffeefilters aufgegeben, so daß die Extraktion von Aromastoffen in erster Linie in diesem Bereich erfolgt. In den Randbereichen ist die Ausnutzung des Kaffeemehls wesentlich schlechter, so daß hier Aromastoffe zum überwiegenden Teil im Kaffeemehl verbleiben. Um auf diese Weise einen aromatisch schmeckenden Kaffee zu brühen, ist es daher erforderlich, eine entsprechend große Menge des Kaffeemehls zu verwenden, da im mittleren Bereich des Kaffeefilters die Aromastoffe relativ schnell ausgezehrt sind, während im Randbereich des Filters das Kaffeemehl nur unzureichend genutzt wird.

Im Wassertank von Kaffeemaschinen befindet sich ein Wasserablaufschlauch, welcher in der Regel eine Wasserablauföffnung von 5 cm aufweist.

Der Wasserablaufschlauch befindet sich im Wassertank, und zwar etwas vertieft, damit u.a. ein Wasserablaufarm darauf gesteckt und somit das Kaffeewasser in den Kaffeefilter direkt hinein geleitet werden kann.

Auf dem Wasserablaufschlauch werden des weiteren verschiedene Wasserablaufarme verwendet, einmal mit mehreren waagerechten Wasserablauföffnungen, desweiteren Wasserablauföffnungen wie ein Duschsystem.

Bekannt ist es auch, daß es unter einem waagerechten Duschsystem pro Durchlauföffnung eine Rundvertiefung gibt.

Das Aufbrühen im Filter vollzieht sich einmal in der Mitte der Kaffeemehloberfläche, wobei außen an der Kaffeefiltertüte am Rand Kaffeemehl kleben bleibt, da der Wasserspiegel immer eine gewisse Höhe erreicht.

Zwischen dem Kaffeefilter und dem oberen Kaffeemaschinen-Deckel mit den Wasserablauföffnungen liegen immer gewisse Luftspielräume. Also gibt es zwischen Kaffeemaschinen-Deckel und Kaffeefilter keinen geschlossenen Abschluß.

Um eine bessere Verteilung des Brühwassers auf dem Kaffeemehl zu erreichen, hat der Anmelder in der deutschen Gebrauchsmusteranmeldung DE 203 18 733 vorgeschlagen, auf dem Filterhalter einen Kaffeefilteraufsatz mit einer Verteilerscheibe, in der Durchlaßöffnungen ausgespart sind, anzuordnen. Bei der dort beschriebenen Anordnung ist jedoch unbefriedigend, daß in den Fällen, in denen die Durchlaßöffnungen bündig mit der Unterseite der Durchlaßscheibe abschließen, ein gleichmäßiges Abtropfen des Brühwassers auf das darunter befindliche Kaffeemehl nicht gewährleistet ist. Vielmehr verteilt sich das Brühwasser häufig an der Unterseite der Scheibe und tropft unkontrollierbar auf das Kaffeemehl herunter.

Die DE 101 11 166 A1 offenbart eine Vorrichtung, bei der eine gattungsgemäße Vorrichtung verwendet wird, die mehrere in einer Linie angeordnete Auslaßöffnungen hat, um das Brühwasser auf der Oberfläche des im Kaffeefilter angeordneten Kaffeemehls aufzugeben. Bereits durch diese Vorrichtung läßt sich die Menge des zu verwendenden Kaffeemehls wesentlich reduzieren.

US-A-3 908 530 offenbart einem Kaffeefilteraufsatz nach dem Oberbegriff des unabhängigen Anspruchs 1.

### Durch die Erfindung zu lösende Aufgaben

Eine durch die Erfindung zu lösende Aufgabe ist es, bekannte Kaffeefilteraufsätze für manuelle oder automatische Kaffeezubereitung so weiterzubilden, daß die Ausnutzung des Kaffeemehls verbessert wird und letztlich weniger Kaffeemehl zum Aufbrühen einer bestimmten Menge Kaffee benötigt wird.

Eine weitere Aufgabe ist es, eine Vorrichtung bereitzustellen, die universell einsetzbar ist, so daß auf die unterschiedlichen Arten von Papierfiltertüten, Filtern und Kaffeemaschine verzichtet werden kann.

### Lösung der Aufgaben

Die Erfindung betrifft in einem ersten Aspekt einen Kaffeefilteraufsatz gemäß dem unabhängigen Anspruchs 1.

Mit dem erfindungsgemäßen Kaffeefilteraufsatz ist es möglich, eine definierte Brühwasserabgabe aufrecht zu erhalten, so daß die Anordnung der Durchlaßöffnungen in der Verteilerscheibe auch der tatsächlichen Brühwasseraufgabe auf das Kaffeemehl entspricht.

Gemäß einer bevorzugten Ausführungsform der Erfindung weisen die Auslaßkanäle einen kegelstumpfartigen Querschnitt auf und enden in einer Abrißkante, an der das Brühwasser kontrolliert abtropfen kann, ohne an der Unterseite der Verteilerscheibe entlang zu laufen. Die Auslaßkanäle sind vorzugsweise ebenfalls einstückig mit der Verteilerscheibe ausgebildet.

Die lichte Weite der Auslaßkanäle entspricht im wesentlichen dem zweiten Durchmesser der Durchlaßöffnungen, d.h. die Durchlaßöffnung setzt sich mit im wesentlichen konstantem Durchmesser im Auslaßkanal fort. Gemäß einer alternativen Ausführungsform kann sich der verjüngende Querschnitt der Durchlaßöffnungen aber auch so in den Auslaßkanälen fortsetzen, daß beispielsweise der bevorzugte kleinste Durchmesser, der hier als zweiter Durchmesser bezeichnet wird, erst an der Abrißkante der Auslaßkanäle erreicht wird.

Vorzugsweise liegt der erste Durchmesser der Durchlaßöffnungen, d.h. der Durchmesser auf der Oberseite der Verteilerscheibe, im Bereich von 3,5 bis 7 mm, vorzugsweise 4 bis 6 mm und besonders bevorzugt bei etwa 5 mm, während der zweite Durchmesser bevorzugt im Bereich von 0,5 bis 3 mm, vorzugsweise 0,8 bis 2 mm und besonders bevorzugt bei etwa 1 mm liegt.

Die Höhe, mit der sich der Auslaßkanal über die Unterseite der Verteilerscheibe nach unten erstreckt, kann beispielsweise 0,5 bis 5 mm betragen und liegt vorzugsweise im Bereich von 1 bis 3 mm und besonders bevorzugt bei etwa 2 mm.

Eine besonders gleichmäßige Brühwasseraufgabe auf das Kaffeemehl wird erreicht, wenn die Durchlaßöffnungen auf konzentrischen Kreisen in der Verteilerscheibe angeordnet sind. Besonders bevorzugt sind die Durchlaßöffnungen als Kreissegmente gleichmäßig auf jedem Kreis verteilt. Beispielsweise können vier Durchlaßöffnungen vorgesehen sein, die jeweils als gleich lange Kreissegmente auf dem Kreis verteilt sind. So können die vier durchlässigen Kreissegmente beispielsweise einen Umfangswinkel von jeweils 45° abdecken und sind jeweils durch undurchlässige Bereiche der Verteilerfläche von wiederum 45° Umfangswinkel voneinander getrennt.

Der Durchmesser des erfindungsgemäßen Kaffeefilteraufsatzes wird entsprechend der Filterhalter gewählt, auf denen er zum Einsatz kommen soll. Für kleine Filterhalter, die für Filter des sog. Typs 102 vorgesehen sind, werden beispielsweise Kaffeefilteraufsätze mit einem Durchmesser von 11,5 cm verwendet, während für sog. Typ 104-Filterhalter Kaffeefilteraufsätze mit einem Durchmesser von 13 cm verwendet werden. Größere Filterhalter, beispielsweise für Filter vom Typ 1 x 6, die vorzugsweise im gastronomischen Bereich verwendet werden, können mit Kaffeefilteraufsätzen mit einem Durchmesser von 15,5 cm bestückt werden. Bevorzugt sind in der Verteilerscheibe des erfindungsgemäßen Kaffeefilteraufsatzes abhängig vom Durchmesser der Verteilerscheibe 1 bis 6 und vorzugsweise 2 bis 4 Kreise mit entsprechenden kreissegmentartigen Durchlaßöffnungen vorgesehen. Vorteilhaft verwendet man beim Filteraufsatz mit 11,5 cm Durchmesser 1 oder zwei, bevorzugt 2 Kreise, beim Aufsatz mit 13 cm Durchmesser 2 oder 3, vorzugsweise 3 Kreise und beim Filter mit 15,5 cm Durchmesser 3 oder 4, vorzugsweise 4 Kreise.

Es ist auch möglich, lediglich einen Filterhaltertyp zu verwenden und entsprechend der eingefüllten Kaffeemenge mehr oder weniger Kreise mit Durchlaßöffnungen für das Auftropfen von Brühwasser freizugeben. Dazu ist vorzugsweise auf der Oberseite der Verteilerscheibe ein herausnehmbarer kreisförmiger Einsatz mit einem L-fömigen Querschnitt vorgesehen, wobei der horizontale Sockel des Einsatzes so dimensioniert ist, daß ein oder mehrere der Kreise bedeckt werden, wobei man selbstverständlich bei der Verwendung von weniger Kaffeemehl die äußersten Kreise in der Verteilerscheibe abdeckt, so daß Brühwasser lediglich durch die Durchlaßöffnungen der inneren Kreise abgegeben werden kann.

Die gleichmäßige Aufgabe von Brühwasser wird weiter begünstigt, wenn der erfindungsgemäße Kaffeefilteraufsatz, wie gemäß einer bevorzugten Variante der Erfindung vorgesehen, auf der Oberseite der Verteilerscheibe eine zentrale Erhebung aufweist. Im Bereich der zentralen Erhebung ist die Verteilerscheibe für das Brühwasser undurchlässig, so daß das aus einer Brüheinrichtung einer Kaffeemaschine oder das manuell aufgegebene Wasser aus dem zentralen Bereich der Verteilerscheibe zunächst seitlich abfließt und erst dann durch die Durchlaßöffnungen nach unten auf das Kaffeemehl im Filterhalter tropfen kann. Eine minimale, beispielsweise kegelförmige Erhebung im zentralen Bereich der Verteilerscheibe, die nur wenige Millimeter über den tiefsten Bereich der Oberseite hinausragt, ist dabei in vielen Fällen ausreichend.

Gemäß einer besonders bevorzugten Variante ist die Oberseite des Kaffeefilteraufsatzes zum äußeren Rand hin wieder leicht erhöht, so daß die Oberseite der Verteilerscheibe des erfindungsgemäßen Kaffeefilteraufsatzes zwischen der zentralen Erhebung und dem äußeren Haltering ein insgesamt leicht konkaves Profil aufweist.

Vorteilhaft ist der erfindungsgemäße Kaffeefilteraufsatz so dimensioniert, daß er einfach in die obere Öffnung eines herkömmlichen Filterhalters eingesetzt werden kann. In dieser besonders kostengünstig realisierbaren Variante eignet sich der Kaffeefilteraufsatz insbesondere zum manuellen Aufbrühen von Kaffee. In diesem Fall ordnet man den Filterhalter mit Filtertüte und Kaffeemehl auf einer Kaffeekanne an und setzt, bevor man Brühwasser aufgießt, den erfindungsgemäßen Kaffeefilteraufsatz in die obere Öffnung des Kaffeefilterhalters ein.

Gemäß einer bevorzugten Variante weist der Kaffeefilteraufsatz jedoch geeignete Befestigungsmittel auf, mit denen der erfindungsgemäße Kaffeefilteraufsatz entweder am Filterhalter oder am Gehäuse einer Kaffeemaschine befestigt werden kann.

Vorzugsweise sind die Befestigungsmittel am äußeren Umfang des Halterings angeordnet. Der Begriff "Haltering" ist im Sinne der vorliegenden Erfindung weit aufzufassen. Hierunter ist jegliche Konfiguration des äußeren Randes der Verteilerscheibe zu verstehen, die ein Einsetzen oder Befestigen des Kaffeefilteraufsatzes im oder am Filterhalter oder an einer automatischen Kaffeemaschine gewährleistet. Im Extremfall stellt bereits der Außenrand der Verteilerscheibe einen Haltering im Sinne der vorliegenden Erfindung dar.

Die Befestigungsmittel können beispielsweise als Außengewinde oder als Teil eines Bajonettverschlusses ausgebildet sein. Damit kann der Kaffeefilteraufsatz entweder in die obere Öffnung des Filterhalters oder in eine geeignete Halterung an der Unterseite der Brühwasseraufgabeöffnung einer Kaffeemaschine eingeschraubt oder eingesetzt werden.

Gemäß einer besonders bevorzugten Variante sind die Befestigungsmittel des Kaffeefilteraufsatzes als Bügel einer Scharnierhalterung ausgebildet. Damit kann der Kaffeefilteraufsatz schwenkbar am Gehäuse einer Kaffeemaschine befestigt werden. Zum Einfüllen von Kaffeemehl braucht der Kaffeefilteraufsatz daher nur weggeklappt werden und der obere Bereich des Kaffeefilterhalters ist für den Benutzer zugänglich. Das Scharnier ist vorzugsweise so ausgebildet, daß der Bügel des Kaffeefilteraufsatzes lösbar in die entsprechende komplementäre am Gehäuse der Kaffeemaschine angebrachte Gegenhalterung des Scharniers eingesetzt ist, so daß der Benutzer den Kaffeefilteraufsatz, beispielsweise zu Reinigungszwecken, leicht ausbauen kann.

Zur einfacheren Handhabung kann der Kaffeefilteraufsatz, insbesondere im Fall einer schwenkbaren Anlenkung am Gehäuse einer Kaffeemaschine, eine Haltenase aufweisen, die vorzugsweise am Außenrand des Kaffeefilteraufsatzes ausgebildet ist. Diese Haltenase, die beispielsweise als Bügel ausgeformt sein kann, kann vom Benutzer zum Wegklappen des Kaffeefilteraufsatzes leicht von außen ergriffen werden.

Mit dem erfindungsgemäßen Kaffeefilteraufsatz kann bei hoher Qualität und bestem Aroma des resultierenden Kaffees eine Steigerung der Kaffeeausbeute von wenigstens 30 % erzielt werden. So können mit einem herkömmlichen 102-Filter ca. 15 Tassen Kaffee hergestellt werden. Bei einem 104-Filter liegt die Ausbeute bei ca. 28 Tassen und bei einem 1 x 6 Filter bei ca. 40 Tassen.

Die Erfindung gemäß einem zweiten Aspekt betrifft auch eine Filtereinheit zur Herstellung von Filterkaffee mit einem Filterhalter, welcher zur Aufnahme einer Filtertüte dient und einem lösbar mit dem Filterhalter verbundenen erfindungsgemäßen Kaffeefilteraufsatz. Der Kaffeefilteraufsatz kann einfach in eine obere Öffnung des Filterhalters eingesetzt sein. Gemäß einer bevorzugten Ausführungsform ist er jedoch über eine Schraub- oder Bajonettverbindung am oberen Ende des Filterhalters montiert.

Die Erfindung gemäß einem dritten Aspekt betrifft außerdem eine Kaffeemaschine mit einem Gehäuse, einem Frischwasserbehälter, einer Brüheinrichtung, einer Filtereinheit mit einem Filterhalter und einem unter der Filtereinheit angeordneten Kaffeebehälter, wobei die Filtereinheit einen erfindungsgemäßen Kaffeefilteraufsatz umfasst. Der Kaffeefilteraufsatz kann dabei in den Filterhalter der Filtereinheit eingesetzt oder eingeschraubt oder mit dem Gehäuse der Kaffeemaschine verbunden sein, beispielsweise schwenkbar an dem Kaffeemaschinengehäuse angelenkt sein.

Die Erfindung wird im folgenden unter Bezugnahme auf ein in der beigefügten Zeichnung dargestelltes Ausführungsbeispiel näher erläutert.

In der Zeichnung zeigt
Fig. 1 einen Querschnitt durch einen erfindungsgemäßen Kaffeefilteraufsatz;
Fig. 2 eine Aufsicht auf den Kaffeefilteraufsatz der Fig. 1.
Fig. 3 eine Aufsicht auf eine Variante des Kaffeefilteraufsatzes der Fig. 1 und 2; und
Fig. 4 eine schematische Darstellung einer erfindungsgemäßen Kaffeemaschine.

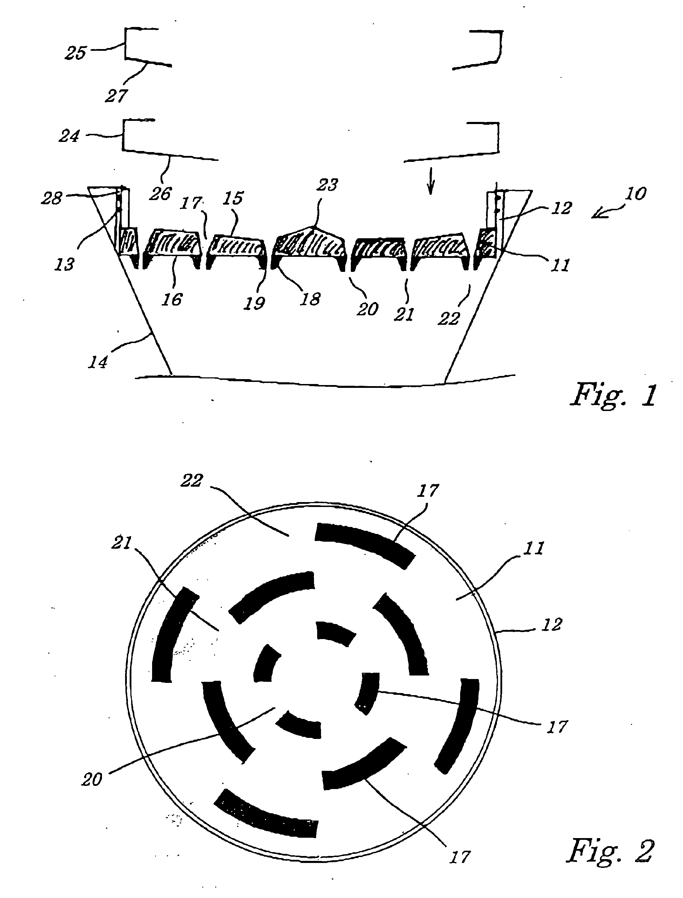

Der erfindungsgemäße Kaffeefilteraufsatz wird in Fig. 1 insgesamt mit der Bezugsziffer 10 bezeichnet. Der Kaffeefilteraufsatz 10 umfasst eine Verteilerscheibe 11, die mit einem umlaufenden Haltering 12 verbunden ist. Vorzugsweise werden die Verteilerscheibe und der Haltering als einstückiges Kunststoffteil, beispielsweise als Spritzgussteil ausgebildet. Am Außenumfang des Halterings sind Befestigungsmittel 13 vorgesehen, mit denen der Haltering am oberen Ende eines (nur teilweise angedeuteten) Filterhalters 14 montiert wird. Bei den Befestigungsmitteln 13 kann es sich beispielsweise um ein Gewinde eines Schraubverschlusses oder einen Bajonettverschluss handeln, wobei die Befestigungsmittel 13 mit komplementären am oberen Ende des Filterhalters 14 angebrachten Befestigungsmitteln zusammen wirken. Selbstverständlich kann der Kaffeefilteraufsatz 10 auch ohne weitere Befestigungsmittel formschlüssig in die Oberseite des Filterhalters 14 eingesetzt werden.

Die Verteilerscheibe weist eine Oberseite 15 und eine im Wesentlichen ebene Unterseite 16 auf. In der Verteilerscheibe sind schlitzartige Durchlaßöffnungen 17 ausgespart, die mit einem ersten Durchmesser D in die Oberseite 15 und mit einem kleineren Durchmesser d in die Unterseite 16 münden. Im Querschnitt der Fig. 1 weisen die Durchlaßöffnungen 17 daher eine trichterförmige Verjüngung auf. Um ein gleichmäßiges und definiertes Abtropfen des Brühwassers auf das Kaffeemehl zu erreichen, erstrecken sich die Durchlaßöffnungen in Form von Auslaßkanälen 18 über die im Wesentlichen ebene Unterseite 16 der Verteilerscheibe 11 hinaus nach unten. Die Auslaßkanäle weisen einen kegelstumpfartigen Querschnitt auf und enden in einer Abrisskante 19, an der das Brühwasser definiert abtropfen kann. Im dargestellten Beispiel ist die lichte Weite, d.h. der Durchlaß in den Auslaßkanälen über die gesamte Höhe h des Auslaßkanals hinweg konstant und entspricht dem zweiten Durchmesser d der entsprechenden Durchlaßöffnung. Vorzugsweise liegt der zweite Durchmesser d im Bereich von 1 mm, Die Durchlaßöffnungen 17 sind auf konzentrischen Kreisen 20, 21, 22 angeordnet, wobei im dargestellten Beispiel ein Kaffeefilteraufsatz mit einem Durchmesser von 13 cm verwendet wird, der beispielsweise für die weit verbreiteten 104-Filterhalter geeignet ist. In diesem Fall sind die Durchlaßöffnungen auf drei konzentrischen Kreisen 20, 21, 22 angeordnet, um eine möglichst gleichmäßige Aufgabe des Brühwassers über den gesamten Filterquerschnitt zu erreichen.

Die Oberseite 15 des Kaffeefilteraufsatzes ist so profiliert, daß das oben eingegossene heiße Wasser möglichst gleichmäßig auf die einzelnen Kreise 20, 21, 22 verteilt wird. So ist im dargestellten Beispiel eine zentrale Erhebung 23 vorgesehen, die das beispielsweise von einer automatischen Kaffeemaschine erzeugte heiße Wasser, das von einem Tropfauslaß der Heizeinrichtung herabtropft, gleichmäßig in radialer Richtung verteilt. Die Oberseite 15 kann zum Außenumfang hin entlang einer Schräge ansteigen.

Es können verschiedene Einsätze 24, 25 vorgesehen sein, die auf der Oberseite des Kaffeefilteraufsatzes 10 so eingesetzt werden, daß entweder die Öffnungen des äußeren Kreisrings 22 oder die Öffnungen der beiden äußeren Kreisringe 21 und 22 abgedeckt werden, so daß Brühwasser nur über die freibleibenden Öffnungen nach unten auf das Kaffeemehl tropfen kann. Dazu weisen die Einsätze 24, 25 ein im Wesentlichen L-förmiges Profil auf, wobei der horizontale Sockel 26, 2.7 jedes Einsatzes 24, 25, so dimensioniert ist, daß die entsprechende Anzahl von Kreisringen bedeckt wird. Obwohl von einem "horizontalen" Sockel gesprochen wird, versteht sich, daß bei einer abgeschrägten Oberseite 15 des erfindungsgemäßen Kaffeefilteraufsatzes die Kontur der Sockel 26, 27 entsprechend angepasst ist, so daß ein dichtes Verschließen der Öffnungen der jeweiligen Außenringe 21 und/oder 22 gewährleistet ist.

Vorzugsweise überragt der Haltering 12 des erfindungsgemäßen Kaffeefilteraufsatzes 10 die Oberseite 15 mit einem gewissen Überstand 28, so daß ein Überlaufen von Brühwasser verhindert wird.

Fig. 2 zeigt eine Aufsicht auf die Oberseite 15 des erfindungsgemäßen Kaffeefilteraufsatzes, allerdings ohne Einsatz 24 oder 25, wobei die bereits im Zusammenhang mit der Fig. 1 erläuterten Bauelemente mit denselben Bezugsziffern bezeichnet sind. Man erkennt insbesondere die 3 Kreisringe 20, 21, 22, auf denen jeweils 4 Durchlaßöffnungen 17 gleichmäßig verteilt sind.

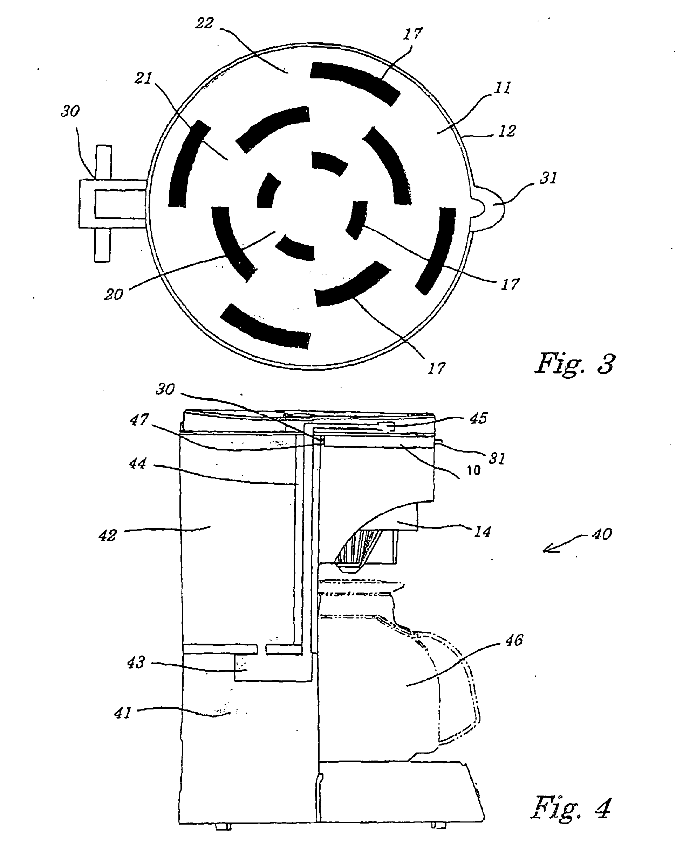

Fig. 3 zeigt eine Variante des Kaffeefilteraufsatzes der Figuren 1 und 2 in der Aufsicht. Bauelemente, die dieselbe oder eine vergleichbare Funktion wie bereits im Zusammenhang mit den Figuren 1 und 2 erläuterte Bauelemente erfüllen, wurden mit denselben Bezugsziffern bezeichnet. Man erkennt, daß bei der in Figur 3 dargestellten Variante am Außenrand des Kaffeefilteraufsatzes 10 ein Bügel 30 eines Scharniers als Befestigungsmittel angeformt ist, so daß der Kaffeefilteraufsatz schwenkbar am Gehäuse einer Kaffeemaschine angelenkt werden kann. Zur leichteren Handhabung des Kaffeefilteraufsatzes ist außerdem eine Haltenase 31 vorgesehen, die vom Benutzer zum Schwenken des Kaffeefilteraufsatzes ergriffen werden kann.

Fig. 4 zeigt schematisch eine erfindungsgemäße Kaffeemaschine, die mit einem erfindungsgemäßen Kaffeefilteraufsatz ausgestattet ist. Die Kaffeemaschine 40 umfasst in an sich bekannter Weise ein Gehäuse 41, einen Frischwasserbehälter 42, eine Brüheinrichtung, die eine Heizeinheit 43, ein Steigrohr 44 und einen Auslaß 45 für das Brühwasser umfasst, eine Filtereinheit mit einem Filterhalter 14 und einen unter der Filtereinheit angeordneten Kaffeebehälter 46. Die Filtereinheit umfasst außerdem einen über dem Filterhalter, also zwischen der Auslaßöffnung 44 für Brühwasser und dem Filterhalter 14 angeordneten erfindungsgemäßen Kaffeefilteraufsatz 10. Der Kaffeefilteraufsatz ist im dargestellten Beispiel über ein Scharnier 47 am Gehäuse 41 der Kaffeemaschine schwenkbar angelenkt und kann vom Benutzer bei Bedarf mittels der Haltenase 31 beispielsweise nach oben weggeklappt oder seitlich weggeschwenkt werden.

## Patentansprüche

1. Kaffeefilteraufsatz zum Verteilen von Brühwasser auf Kaffeemehl, mit einer Verteilerscheibe (11), die mit einem Haltering (12) verbunden ist, wobei in der Verteilerscheibe Durchlassöffnungen (17) ausgespart sind, die Durchlassöffnungen (17) als schlitzartige Kreissegmente ausgebildet sind, die sich von einem ersten Durchmesser (D) auf der Oberseite (15) der Verteilerscheibe (11) zu einem zweiten Durchmesser (d) auf der im wesentlichen ebenen Unterseite (16) der Verteilerscheibe (11) verjüngen, **dadurch gekennzeichnet, dass** sich die Durchlassöffnungen (17) in Form von Auslasskanälen (18) über die im wesentlichen ebene Unterseite (16) der Verteilerscheibe (11) hinaus nach unten erstrecken.

2. Kaffeefilteraufsatz gemäß Anspruch 1, **dadurch gekennzeichnet, dass** die Auslasskanäle (18) eine kegelstumpfartigen Querschnitt aufweisen und in einer Abrisskante (19) enden.

3. Kaffeefilteraufsatz gemäß einem der Ansprüche 1 oder 2, **dadurch gekennzeichnet, dass** die lichte Weite der Auslasskanäle (18) im wesentlichen dem zweiten Durchmesser (d) der Durchlassöffnungen (17) entspricht.

4. Kaffeefilteraufsatz gemäß einem der vorhergehenden Ansprüche, **dadurch gekennzeichnet, dass** der erste Durchmesser (D) im Bereich von 3,5 bis 7 mm, vorzugsweise 4 bis 6 mm und besonders bevorzugt bei etwa 5 mm liegt, während der zweite Durchmesser (d) bevorzugt im Bereich von 0,5 bis 3 mm, vorzugsweise 0,8 bis 2 mm und besonders bevorzugt bei etwa 1 mm.

5. Kaffeefilteraufsatz gemäß Anspruch 4, **dadurch gekennzeichnet, dass** die Höhe (h) mit der sich der Auslasskanals über Unterseite (16) der Verteilerscheibe (11) nach unten erstreckt, im Bereich von 0,5 bis 5 mm, vorzugsweise 1 bis 3 mm und besonders bevorzugt etwa bei 2 mm liegt.

6. Kaffeefilteraufsatz gemäß einem der Ansprüche 1 bis 5, **dadurch gekennzeichnet, dass** die Durchlassöffnungen (17) auf konzentrischen Kreisringen (20,21,22) in der Verteilerscheibe (11) angeordnet sind.

7. Kaffeefilteraufsatz gemäß Anspruch 6, **dadurch gekennzeichnet, dass** jeweils vier Durchlassöffnungen (17) gleichmäßig auf jeweils einem Kreisring (20,21,22) verteilt sind.

8. Kaffeefilteraufsatz gemäß einem der Ansprüche 6 oder 7, **dadurch gekennzeichnet, dass** abhängig vom Durchmesser der Verteilerscheibe (11) ein bis sechs, vorzugsweise zwei bis vier Kreisringe (20,21,22) mit Durchlassöffnungen vorgesehen sind.

9. Kaffeefilteraufsatz gemäß einem der Ansprüche 6 bis 8, **dadurch gekennzeichnet, dass** auf der Oberseite (15) der Verteilerscheibe (11) ein herausnehmbarer kreisringförmiger Einsatz (24,25) mit einem L-förmigen Querschnitt vorgesehen ist, wobei der horizontale Sockel (26,27) des Einsatzes so dimensioniert ist, dass wenigstens ein Teil der Kreisringe (20,21,22) bedeckt wird.

10. Kaffeefilteraufsatz gemäß einem der Ansprüche 1 bis 9, **dadurch gekennzeichnet, dass** die Oberseite (15) der Verteilerscheibe (11) eine zentrale Erhebung (23) vorgesehen ist.

11. Kaffeefilteraufsatz gemäß Anspruch 10, **dadurch gekennzeichnet, dass** die Oberseite (15) der Verteilerscheibe (11) zwischen der zentralen Erhebung (23) und dem Haltering (12) ein konkaves Profil aufweist.

12. Kaffeefilteraufsatz gemäß einem der Ansprüche 1 bis 11, **dadurch gekennzeichnet, dass** der Kaffeefilteraufsatz Befestigungsmittel (13, 30) aufweist.

13. Kaffeefilteraufsatz gemäß Anspruch 12, **dadurch gekennzeichnet, dass** die Befestigungsmittel (13, 30) am äußeren Umfang des Halterings (12) angeordnet sind.

14. Kaffeefilteraufsatz gemäß einem der Ansprüche 12 oder 13, **dadurch gekennzeichnet, dass** die Befestigungsmittel als Außengewinde (13) oder als Teil eines Bajonettverschlusses ausgebildet sind.

15. Kaffeefilteraufsatz gemäß einem der Ansprüche 12 oder 13, **dadurch gekennzeichnet, dass** die Befestigungsmittel als Bügel (30) eines Scharniers ausgebildet sind.

16. Kaffeefilteraufsatz gemäß einem der Ansprüche 10 bis 15, **dadurch gekennzeichnet, dass** am Außenrand des Kaffeefilteraufsatzes eine Haltenase (31) ausgebildet ist.

17. Filtereinheit zur Herstellung von Filterkaffee mit einem Filterhalter welcher zur Aufnahme einer Filtertüte dient, und einem mit dem Filterhalter lösbar verbundenen Kaffeefilteraufsatz nach einem der Ansprüche 1 - 16.

18. Filtereinheit gemäß Anspruch 17, **dadurch gekennzeichnet, dass** der Kaffeefilteraufsatz in eine obere Öffnung des Filterhalters eingesetzt ist.

19. Filtereinheit gemäß Anspruch 18, **dadurch gekennzeichnet, dass** der Kaffeefilteraufsatz in eine obere Öffnung des Filterhalters eingeschraubt ist.

20. Kaffeemaschine mit einem Gehäuse (41), einem Frischwasserbehälter (42), einer Brüheinrichtung (43,44,45), einer Filtereinheit mit einem Filterhalter (14) und einem unter der Filtereinheit angeordneten Kaffeebehälter (46), **dadurch gekennzeichnet**, das die Filtereinheit einen Kaffeefilteraufsatz (10) nach einem der Ansprüche 1 - 16 umfasst.

21. Kaffeemaschine gemäß Anspruch 20, **dadurch gekennzeichnet, dass** der Kaffeefilteraufsatz (10) schwenkbar an dem Gehäuse (41) angelenkt ist.

## Claims

1. Coffee filter attachment for distributing scalding water over ground coffee, having a distribution plate (11) attached to a retaining ring (12), wherein openings (17) are formed in the distribution plate, the openings (17) are formed as slot-like segments of a circle which taper from a first diameter (D) on the top (15) of the distribution plate (11) to a second diameter (d) on the substantially flat bottom (16) of the distribution plate (11), **characterised in that** the openings (17) extend downwards in the form of outlet channels (18) beyond the substantially flat bottom (16) of the distribution plate (11).

2. Coffee filter attachment according to claim 1, **characterised in that** the outlet channels (18) have a truncated cone shape in cross section and terminate in a drip-off edge (19).

3. Coffee filter attachment according to one of claims 1 or 2, **characterised in that** the internal width of the outlet channels (18) corresponds substantially to the second diameter (d) of the openings (17).

4. Coffee filter attachment according to one of the preceding claims, **characterised in that** the first diameter (D) is in the range from 3.5 to 7 mm, preferably 4 to 6 mm and particularly preferably is about 5 mm, whereas the second diameter (d) is preferably in the range from 0.5 to 3 mm, preferably 0.8 to 2 mm and particularly preferably about 1 mm.

5. Coffee filter attachment according to claim 4, **characterised in that** the height (h) to which the outlet channel extends downwards over the bottom (16) of the distribution plate (11) is in the range from 0.5 to 5 mm, preferably 1 to 3 mm and particularly preferably about 2 mm.

6. Coffee filter attachment according to one of claims 1 to 5, **characterised in that** the openings (17) are arranged in concentric circles (20, 21, 22) in the distribution plate (11).

7. Coffee filter attachment according to claim 6, **characterised in that** four openings (17) in each case are uniformly distributed around each circle (20, 21, 22).

8. Coffee filter attachment according to one of claims 6 or 7, **characterised in that** depending on the diameter of the distribution plate (11) one to six, preferably two to four circles (20, 21, 22) are provided with openings.

9. Coffee filter attachment according to one of claims 6 to 8, **characterised in that** on the top (15) of the distribution plate (11) is provided a removable circular insert (24, 25) having an L-shaped cross section, wherein the horizontal base (26, 27) of the insert is of such dimensions that the circles (20, 21, 22) are at least partly covered.

10. Coffee filter attachment according to one of claims 1 to 9, **characterised in that** the top (15) of the distribution plate (11) a central elevated section (23) is provided.

11. Coffee filter attachment according to claim 10, **characterised in that** the top (15) of the distribution plate (11) has a concave profile between the central elevated section (23) and the retaining ring (12).

12. Coffee filter attachment according to one of claims 1 to 11, **characterised in that** the coffee filter attachment has fixing means (13, 30).

13. Coffee filter attachment according to claim 12, **characterised in that** the fixing means (13, 30) are arranged around the outer circumference of the retaining ring (12).

14. Coffee filter attachment according to one of claims 12 or 13, **characterised in that** the fixing means are in the form of an external thread (13) or part of a bayonet closure.

15. Coffee filter attachment according to one of claims 12 or 13, **characterised in that** the fixing means are in the form of a bracket (30) of a hinge.

16. Coffee filter attachment according to one of claims 10 to 15, **characterised in that** a retaining lug (31) is formed on the outer edge of the coffee filter attachment.

17. Filter unit for making filter coffee, having a filter holder which serves to receive a filter bag, and a coffee filter attachment according to one of claims 1 to 16 releasably connected to the filter holder.

18. Filter unit according to claim 17, **characterised in that** the coffee filter attachment is inserted in an upper opening of the filter holder.

19. Filter unit according to claim 18, **characterised in that** the coffee filter attachment is screwed into an upper opening of the filter holder.

20. Coffee machine having a housing (41), a container (42) for fresh water, a water heating device (43, 44, 45), a filter unit with a filter holder (14) and a coffee container (46) arranged underneath the filter unit, **characterised in that** the filter unit comprises a coffee filter attachment (10) according to one of claims 1 to 16.

21. Coffee machine according to claim 20, **characterised in that** the coffee filter attachment (10) is pivotably jointed to the housing (41).

## Revendications

1. Chapeau de filtre à café pour distribuer de l'eau chaude sur une mouture de café, comprenant un disque distributeur 11 relié à une bague de retenue (12), le disque distributeur présentant des ouvertures de passage (17), celles-ci étant des segments circulaires en forme de fente qui se rétrécissent depuis un premier diamètre (D) sur la face supérieure du disque distributeur (11) jusqu'à un deuxième diamètre (d) sur la face inférieure (16) essentiellement plane du disque distributeur (11), **caractérisé en ce que** les ouvertures de passage (17) s'étendent en forme de canaux d'écoulement (18) vers le bas au-delà de la face inférieure essentiellement plane (16) du disque distributeur (11).

2. Chapeau de filtre à café selon la revendication 1, **caractérisé en ce que** les canaux d'écoulement (18) présentent une section transversale tronconique et débouchent dans une arête de rupture (19).

3. Chapeau de filtre à café selon l'une quelconque des revendications 1 ou 2, **caractérisé en ce que** la largeur totale des canaux d'écoulement (18) correspond essentiellement au deuxième diamètre (d) des ouvertures de passage (17).

4. Chapeau de filtre à café selon l'une quelconque des revendications précédentes, **caractérisé en ce que** le premier diamètre (D) présente une grandeur de l'ordre de 3,5 à 7 mm, de préférence de 4 à 6 mm, et idéalement de 5 mm environ, tandis que le deuxième diamètre (d) se situe entre 0,5 et 3 mm, de préférence entre 0,8 et 2 mm, et idéalement à 1 mm environ.

5. Chapeau de filtre à café selon la revendication 4, **caractérisé en ce que** la hauteur (h) sur laquelle le canal d'écoulement s'étend vers le bas sur la face inférieure (16) du disque distributeur (11) présente une grandeur de l'ordre de 0,5 à 5 mm, de préférence de 1 à 3 mm, et idéalement de 2 mm environ.

6. Chapeau de filtre à café selon l'une quelconque des revendications 1 à 5, **caractérisé en ce que** les ouvertures de passage (17) sont disposées sur des anneaux de cercle concentriques (20, 21, 22) dans le disque distributeur (11).

7. Chapeau de filtre à café selon la revendication 6, **caractérisé en ce que** respectivement quatre ouvertures de passage (17) sont réparties uniformément sur chacun des anneaux de cercle (22, 21, 22).

8. Chapeau de filtre à café selon l'une quelconque des revendications 6 ou 7, **caractérisé en ce qu'**en fonction du diamètre du disque distributeur (11) un à six, de préférence deux à quatre anneaux de cercle (20, 21, 22) avec des ouvertures de passage sont prévus.

9. Chapeau de filtre à café selon l'une quelconque des revendications 6 à 8, **caractérisé en ce que** sur la face supérieure (15) du disque distributeur (11) un insert (24, 25) amovible en forme d'anneau de cercle avec une section transversale en forme de L est prévu, le socle horizontal (28, 27) de l'insert étant dimensionné pour recouvrir au moins une partie des anneaux de cercle (20, 21, 22).

10. Chapeau de filtre à café selon l'une quelconque des revendications 1 à 9, **caractérisé en ce que** la face supérieure (15) du disque distributeur (11) présente une élévation centrale (23).

11. Chapeau de filtre à café selon la revendication 10, **caractérisé en ce qu'**entre l'élévation centrale (23) et la bague de retenue (12) la face supérieure (15) du disque distributeur (11) présente un profil concave.

12. Chapeau de filtre à café selon l'une quelconque des revendications 1 à 11, **caractérisé en ce que** le chapeau de filtre à café présente des moyens de fixation (13, 30).

13. Chapeau de filtre à café selon la revendication 12, **caractérisé en ce que** les moyens de fixation (13, 30) sont disposés sur la périphérie extérieure de la bague de retenue (12).

14. Chapeau de filtre à café selon l'une quelconque des revendications 12 ou 13, **caractérisé en ce que** les moyens de fixation présentent la forme d'un filet mâle (13) ou font partie d'une fermeture à baïonnette.

15. Chapeau de filtre à café selon l'une quelconque des revendications 12 ou 13, **caractérisé en ce que** les moyens de fixation présentent la forme d'un étrier (30) d'une charnière.

16. Chapeau de filtre à café selon l'une quelconque des revendications 10 à 15, **caractérisé en ce qu'**un cran d'arrêt (31) est formé sur le bord extérieur du chapeau de filtre à café.

17. Unité de filtre pour préparer du café filtré, comprenant un support de filtre conçu pour recevoir un filtre en papier, et un chapeau de filtre à café relié de façon amovible au support de filtre selon l'une quelconque des revendications 1 à 16.

18. Unité de filtre à café selon la revendication 17, **caractérisée en ce que** le chapeau de filtre à café est inséré dans une ouverture supérieure du support de filtre.

19. Unité de filtre selon la revendication 18, **caractérisée en ce que** le chapeau de filtre à café est vissé dans une ouverture supérieure du support de filtre.

20. Machine à café comprenant un boîtier (41), un réservoir d'eau fraîche (42), un dispositif de chauffage (43, 44, 45), une unité de filtre munie d'un support de filtre (14) et un bac à café (46) situé en dessous de l'unité de filtre, **caractérisée en ce que** l'unité de filtre comprend un chapeau de filtre à café (10) selon l'une quelconque des revendications 1 à 16.

21. Machine à café selon la revendication 20, **caractérisée en ce que** le chapeau de filtre à café (10) est articulé de façon pivotante sur le boîtier (41).
